# FASCICULE DE BREVET EUROPEEN

(11) **EP 1 711 341 B1**
(45) Date de publication et mention de la délivrance du brevet: **17.12.2014**
(21) Numéro de dépôt: 05717685.1
(22) Date de dépôt: 25.01.2005
(51) Int. Cl.: B32B 17/10

(54) **ENSEMBLE DES VITRAGES FEUILLETES**
EINHEIT ENTHALTEND VERBUNDGLÄSSER
UNIT COMPRISING LAMINATED GLASS PANES

(30) Priorité: 27.01.2004 DE 102004003960
(43) Date de publication de la demande: 18.10.2006
(73) Titulaire: SAINT-GOBAIN GLASS FRANCE, 92400 Courbevoie (FR)
(72) Inventeur: ECKELT, Christian, A-4400 Steyr (AT); LEOPOLDSEDER, Roland, A-4300 St Valentin (AT)
(74) Mandataire: Colombier, Christian
(86) Numéro de dépôt international: PCT/FR2005/050042
(87) Numéro de publication internationale: WO 2005/075780

(56) Documents cités:
- DE-A1- 19 816 099

## Description

L'invention se rapporte à un ensemble comprenant au moins deux vitrages feuilletés comme défini dans le préambule de la revendication 1.

Le document DE-A1-198 16 099 décrit un dispositif d'assemblage de cette nature, en particulier pour des vitrages feuilletés, dans lequel, selon une forme de réalisation, deux vitrages feuilletés disposés parallèlement et à distance l'un de l'autre enferment entre eux avec un chevauchement, à proximité de leurs arêtes, un troisième vitrage feuilleté. Dans la région du chevauchement, les trois vitrages feuilletés sont assemblés à l'aide d'un boulon, qui traverse les trois vitrages feuilletés. Les trous correspondants dans les trois vitrages feuilletés ne doivent pas nécessairement être alignés axialement car, selon cette solution connue, une masse de scellement durcissable qui enrobe ledit boulon peut compenser totalement les tolérances sur les positions des trous. Après son durcissement, cette masse de scellement reprend les efforts exercés sur les parois des trous. Ce dispositif d'assemblage est prévu en particulier pour le montage dit de longerons de verre, c'est-à-dire d'éléments de renforcement allongés composés de plusieurs poutres de verre de structure composite, principalement dans les façades vitrées.

Il est également connu de faire déborder du côté du bord, hors du composite de verre, des éléments d'assemblage pour des assemblages bord à bord de vitrages feuilletés. Ainsi, le document DE-PS 1 203 924 décrit un verre de sécurité feuilleté composé de deux vitrages de verre rigides et d'une couche de colle qui les assemble. Le bord d'une des deux vitrages rigides dépasse nettement le bord de l'autre vitrage. La couche de colle se termine avec un retrait avant le bord du plus petit vitrage rigide. La fente qui subsiste est comblée avec une masse de scellement en silicone élastomère, qui déborde encore sous la forme d'une arête prolongée au-delà du dépassement du plus grand vitrage rigide et qui peut contenir une armature métallique. Elle permet la fixation du vitrage feuilleté à un châssis ou analogue sans forer dans les vitrages rigides (de verre) eux-mêmes. Ce dispositif d'assemblage a été imaginé principalement pour le montage de vitrages feuilletés dans des avions.

Dans un autre dispositif d'assemblage pour des vitrages feuilletés (DE-C1-199 58 372), les vitrages (centraux) chaque fois intérieurs sont, dans les régions de bord de vitrages feuilletés composés d'au moins trois vitrages rigides, plus courts que les vitrages extérieurs. Dans la fente qui subsiste, on introduit un élément de maintien rigide, par exemple une plaque d'acier, dont l'épaisseur correspond à l'épaisseur dudit vitrage central. Il est ainsi possible d'incorporer cet élément de maintien dans le composite lors du processus d'assemblage (autoclave ou procédé analogue). Comme élément d'assemblage, on peut utiliser à cet effet les films adhésifs thermoplastiques utilisés de toute façon entre les vitrages rigides. Ces vitrages feuilletés peuvent être fixés à une ossature sans trous dans les vitrages rigides à l'aide de l'élément de maintien qui dépasse.

A côté de la solution mentionnée dans l'introduction pour la compensation des tolérances des parois des trous lors de la fixation de boulons ou de douilles dans des trous passants dans des vitrages composites à plusieurs couches (chaque fois avec deux vitrages extérieurs et au moins un vitrage central), on connaît encore d'autres solutions par les documents DE 100 55 983 C1 et DE 100 63 547 C1. Toutes deux portent sur un positionnement de douilles avec des douilles excentriques, pour lequel dans le premier document le trou dans un vitrage central est plus petit que les trous dans les vitrages extérieurs, tandis que dans la deuxième solution le trou du vitrage central est plus grand que celui des vitrages extérieurs.

Le problème à la base de l'invention est de procurer un autre dispositif d'assemblage pour des vitrages feuilletés, qui permet d'assembler ceux-ci l'un à l'autre en alignement axial lisse (pour une même épaisseur).

Conformément à l'invention, ce problème est résolu par les charactéristiques de la revendication 1.

Les caractéristiques des revendications dépendantes présentent des formes de réalisation avantageuses de cette invention.

L'avantage conforme au problème et à l'invention résulte du fait que les vitrages feuilletés sont échelonnés au bord dans la région de recouvrement, ou que dans chaque cas les vitrages individuels du composite respectif ne s'étendent pas toutes jusqu'à ce bord. Du fait que seule une partie des vitrages rigides de chaque vitrage feuilleté s'étend dans la région du recouvrement, où l'assemblage entre les vitrages feuilletés est réalisé, il est possible de réaliser des transitions lisses des faces externes des vitrages assemblées successives dans une direction d'extension, et sur lesquelles seuls des éléments de fixation locaux sont éventuellement en saillie. Il est en particulier possible de se passer de pattes métalliques posées à l'extérieur ou analogues, qui sont dans le cas contraire inévitables dans les assemblages bord à bord de deux vitrages (de verre). Par "direction d'extension" on entend ici l'extension des vitrages feuilletés orientée par dessus le joint d'assemblage.

La nature de l'assemblage des vitrages se recouvrant l'un l'autre partiellement peut être choisie selon les besoins et les possibilités de montage sur le site. On utilisera de préférence des assemblages à boulons du type déjà connu par l'état de la technique (avec des trous de passage) comme organe d'assemblage, pour aussi solidariser mécaniquement les vitrages feuilletés, une forme de réalisation avantageuse selon l'invention étant encore discutée à cet effet.

Il est cependant également possible de travailler avec des assemblages à pinces situés à l'extérieur, qui serrent uniquement les vitrages l'un sur l'autre dans la région de recouvrement, avec lesquels il faut de préférence prévoir des couches intermédiaires élastiques entre les surfaces de verre.

Enfin, on peut imaginer d'assembler les vitrages dans la région de recouvrement par collage de surface, en introduisant une masse de scellement hautement adhésive, durcissable ou à élasticité permanente, dans la fente/l'interstice entre les vitrages individuels. Le cas échéant, on peut améliorer l'adhérence par un primaire, avec lequel les faces de verre tournées l'une vers l'autre sont revêtues. De telles solutions peuvent être réalisées de façon transparente et procurer l'impression d'une bande de verre continue d'une pièce.

Il va de soi que les possibilités d'assemblage précitées ainsi que d'autres options d'assemblage non mentionnées explicitement ici peuvent être librement combinées les unes avec les autres au gré des besoins.

Il est en principe possible de ne laisser dépasser que des vitrages rigides individuels (monolithiques) des vitrages feuilletés dans la région de recouvrement, pour assembler l'une à l'autre selon l'invention par exemple deux vitrages feuilletés se composant chacun de deux vitrages rigides (de verre). Dans ce cas, on réalisera les deux vitrages se recouvrant en partie au moins comme des vitrages de verre précontraint, afin d'atteindre la résistance mécanique nécessaire.

Si les vitrages feuilletés se composent chacun d'au moins trois vitrages individuels, on peut alors réaliser l'assemblage selon l'invention, en ne laissant dépasser qu'un vitrage extérieur d'un premier vitrage au-delà des bords des deux autres vitrages, tandis que le vitrage extérieur correspondant au vitrage à assembler est en retrait dans une mesure correspondante par rapport aux deux autres vitrages.

Selon une variante, on peut également placer en retrait le vitrage central d'un composite triple et munir le vitrage associé d'un vitrage central qui dépasse. De ce fait, les deux vitrages composites sont quasi assemblés par indentation ou par tenon et mortaise dans la région de recouvrement.

Toutes les configurations qui précèdent sont réalisables de manière analogue avec des vitrages feuilletés qui comprennent plus de trois vitrages rigides, dans lesquels les "vitrages individuels" qui dépassent peuvent alors eux-mêmes à nouveau former des parties de vitrages feuilletés. Ceci constitue une forme de réalisation préférée de la présente invention, qui est décrite à titre d'exemple à l'aide des figures.

D'autres possibilités ne sont cependant pas pour autant exclues du domaine du concept de l'invention, dans la mesure où elles sont comprises dans les revendications. Ici également, il serait par exemple possible de prévoir une indentation des vitrages individuels dans la région de recouvrement, en faisant se succéder en alternance un vitrage en saillie et un vitrage en retrait.

Il va de soi que des fentes éventuelles ou des espaces intermédiaires éventuels entre les vitrages individuels ou feuilletés en recouvrement doivent toujours être remplis de matières appropriées (de préférence transparentes), de telle façon que celles-ci ne doivent pas reprendre des contraintes de flexion statiques internes excessives sous l'action d'efforts de serrage ou de pinçage provenant des éléments d'assemblage.

Si l'on utilise des éléments de ferrure dans des trous des régions se recouvrant mutuellement des vitrages feuilletés, ceux-ci peuvent dans un cas optimal être enfoncés à fleur de la surface, ou ne se trouver que légèrement en saillie au-dessus des faces extérieures des vitrages. Des pattes ou des rails placés à l'extérieur, apparents à la vue, peuvent au contraire, comme on l'a déjà indiqué, être complètement supprimés avec la solution conforme à l'invention, de telle façon que l'on puisse obtenir un effet de "vitrage pur" visuellement transparent.

Une compensation d'alignement entre les trous dans les vitrages feuilletés à assembler peut se limiter, selon l'invention, à deux vitrages individuels, un de chaque vitrage feuilleté, même si ceux-ci sont à leur tour des composants de parties de vitrages feuilletés qui se recouvrent. Selon une forme de réalisation avantageuse, ceci est obtenu en ce qu'un organe d'assemblage traversant les vitrages feuilletés dans la région de recouvrement est centré sur l'axe d'un trou d'un premier vitrage individuel, tandis que d'éventuels écarts du centre du trou d'un deuxième vitrage individuel appartenant à l'autre vitrage feuilleté sont compensés avec des moyens appropriés (par exemple des bagues excentriques selon le document EP 506 522 B1). Il est en l'occurrence intéressant de faire appuyer radialement l'organe d'assemblage sur les parois d'au moins deux trous appartenant aux différentes vitrages feuilletés, afin que des charges extérieures puissent être transmises de façon fiable et sans dommage entre les deux vitrages.

D'autres détails et avantages de l'objet de l'invention apparaîtront par les dessins d'un exemple de réalisation et par leur description détaillée qui suit.

Dans ces dessins simplifiés, sans échelle particulière,
- La Fig. 1 est une vue en perspective d'une région de recouvrement de deux vitrages feuilletés à assembler avec un dispositif d'assemblage conforme à l'invention, avec une représentation éclatée d'un organe d'assemblage correspondant; et
- La Fig. 2 montre une représentation en coupe du dispositif d'assemblage selon la Fig. 1 dans la région de recouvrement.

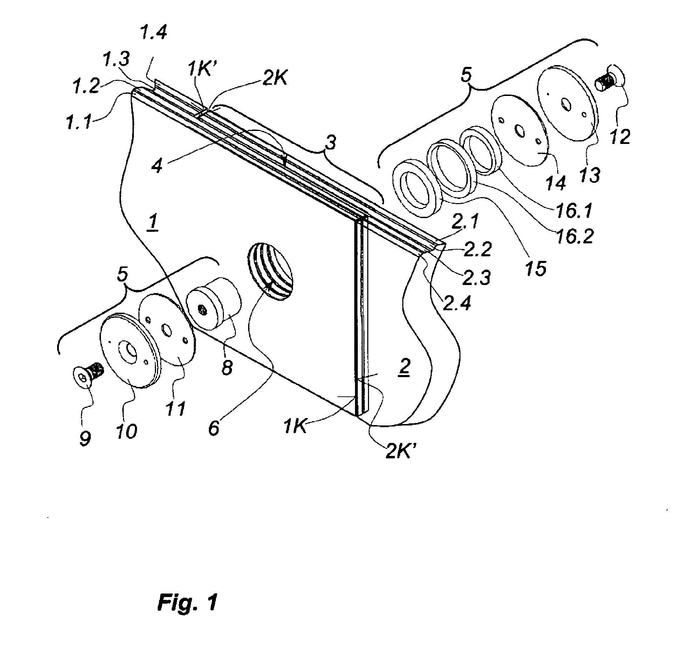

Dans la Fig. 1 sont représentées des parties de deux vitrages feuilletés 1 et 2, qui sont chacun composées de quatre vitrages rigides 1.1, 1.2, 1.3, 1.4 ainsi que 2.1, 2.2, 2.3, 2.4 et qui sont jointifs l'un à l'autre bord à bord par des arêtes droites. Les vitrages individuels 1.1 à 1.4 et 2.1 à 2.4 sont assemblés de façon permanente les uns aux autres en surface de la manière conventionnelle à l'aide de films adhésifs (PVB) thermoplastiques intermédiaires. Pour la description qui suit, on considère que les vitrages individuels sont en verre. L'application du dispositif d'assemblage décrit ici pour des composites verre-matière plastique ou des vitrages feuilletés intégralement en matière plastique n'est cependant pas exclue pour autant.

Les vitrages de verre individuels peuvent être constitués de verre flotté normal ; ils peuvent être précontraints ou partiellement précontraints.

On voit sur les arêtes supérieures des vitrages feuilletés que les vitrages individuels 1.1 et 1.2 ainsi que 2.1 et 2.2 se prolongent au-delà des bords des vitrages individuels respectivement associés 1.3 et 1.4 ainsi que 2.3 et 2.4. Les arêtes bord à bord déjà mentionnées sont désignées par 1K et 2K sur les arêtes externes (en même temps faces frontales des vitrages 1.1 et 1.2 ainsi que 2.1 et 2.2) et 1K' ainsi que 2K' pour les arêtes échelonnées en retrait (faces frontales des vitrages 1.3 et 1.4 ainsi que 2.3 et 2.4). Il est en particulier préférable de dimensionner les dépassements partiels respectifs des deux vitrages feuilletés de manière exactement égale, de telle manière qu'il n'apparaisse pas de fentes importantes dans leurs faces extérieures après l'assemblage.

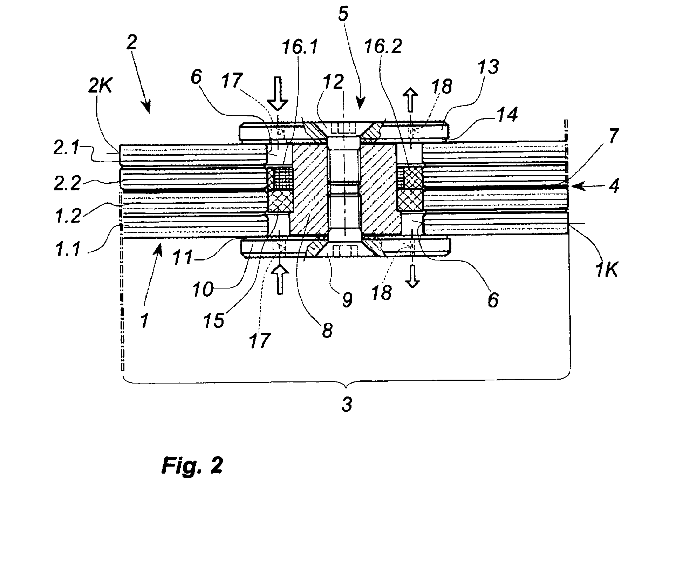

Ces arêtes bord à bord délimitent entre elles une région de recouvrement 3. Ici, des faces partielles des vitrages 1.2 et 2.2 se font face. Dans la région de recouvrement 3, il se forme entre elles une fente 4. Dans celle-ci est introduite une couche intermédiaire (voir Fig. 2), qui devrait avoir la même épaisseur que la couche adhésive qui assemble lesdites deux vitrages chaque fois avec les vitrages contigus 1.3 respectivement 2.3. Ainsi, on assure d'une part que les deux faces extérieures des vitrages feuilletés 1 et 2 se trouvent en alignement lisse l'un par rapport à l'autre, lorsqu'ils sont orientés parallèlement l'un à l'autre. D'autre part, les faces tournées l'une vers l'autre des deux vitrages de verre individuels ne sont pas appliquées directement l'un sur l'autre. En outre, la couche intermédiaire relativement molle peut admettre de faibles écarts par rapport à l'alignement longitudinal parallèle des deux vitrages feuilletés et de façon limitée aussi des déformations dynamiques dues aux efforts et aux couples qui agissent de l'extérieur.

Bien que la couche intermédiaire mentionnée dans la fente 4 pourrait en principe assembler les deux vitrages feuilletés l'un à l'autre de façon adhésive en surface, si elle se présentait sous la forme d'une colle à forte adhérence, il est prévu dans la région de recouvrement 3, selon une forme de réalisation avantageuse de l'invention, au moins un organe d'assemblage ou de maintien mécanique en plusieurs parties, dont les éléments sont globalement pourvus dans la Fig. 1 du repère numérique 5 de part et d'autre de la région de recouvrement 3. Les repères numériques individuels des éléments seront introduits lors de la description de la Fig. 2.

Bien entendu, il peut être prévu en cas de besoin plusieurs organes d'assemblage dans la région de recouvrement, si les conditions de charge le requièrent et si l'espace de construction ou la surface de la région de recouvrement ont été conçus suffisamment grands.

Les vitrages individuels 1.1, 1.2, 2.2 et 2.1 sont à cet effet traversés ensemble dans la région de recouvrement. Leurs trous au moins approximativement alignés axialement fournissent ensemble un trou passant 6 situé au centre dans la région de recouvrement, qui peut cependant avoir des parois échelonnées par suite de tolérances de fabrication (écarts de position/de mesures) des trous individuels. Comme cela a également été décrit dans l'état de la technique mentionné dans l'introduction, ce problème se pose souvent avec de telles structures d'assemblage, parce les trous peuvent être amenés en position axiale exacte l'un au-dessus de l'autre avec un coût non négligeable lors du perçage des vitrages individuels et lors du processus d'assemblage. Toutefois, les diamètres nominaux des trous eux-mêmes peuvent dans tous les cas être reproduits avec une précision suffisamment grande, de sorte que des pièces d'ajustage peuvent être réservées pour les remplir.

A l'aide de la représentation en coupe de la Fig. 2, on décrira à présent en détail les composants de l'organe d'assemblage 5 (déjà monté) ainsi que leurs fonctions. Des pièces identiques à celles de la Fig. 1 sont à nouveau pourvues des mêmes repères numériques. Le regard tombe du haut vers le bas sur la vue de la Fig. 1, la coupe est menée par le plan horizontal axial du trou de passage 6. On ne peut voir que les parties des deux vitrages feuilletés 1 et 2 qui se recouvrent mutuellement (sur la portée de l'accolade 3), en plus des arêtes 1K et 2K. On reconnaît en outre la couche intermédiaire 7 déjà mentionnée, disposée dans la fente 4 entre les vitrages 1.2 et 2.2.

La pièce centrale de cet organe d'assemblage est une douille 8 en métal ou en une matière plastique à haute résistance, dont la longueur correspond sensiblement à l'épaisseur totale des vitrages feuilletés 1 et 2, mais dont le diamètre extérieur est nettement plus petit que le diamètre du trou de passage 6. La douille cylindrique échelonnée extérieurement 8 est pourvue d'un filet intérieur continu (une douille en matière plastique sera pourvue d'un insert métallique fileté). Des vis à tête 9 et 12 sont vissées par les deux côtés, chacune de ces vis à tête réalisée sous la forme d'une vis à tête noyée à six pans intérieurs étant introduite à travers une rondelle d'extrémité 10, respectivement 13, qui masque vers l'extérieur le trou 6. Entre les rondelles d'extrémité 10 et 13 et la surface annulaire de verre recouverte respectivement par celles-ci sont insérées des cales de matière plastique 11 respectivement 14, qui empêchent le contact direct entre les rondelles (métalliques) 10 et 13 et les arêtes et les faces du verre.

Il est certes avantageux, pour la plupart des cas de charge, que les rondelles d'extrémité aient une large base d'appui sur la surface extérieure sur laquelle elles s'appuient, comme cela est montré ici. En même temps, une compensation transversale glissante sur les surfaces extérieures par rapport à des écarts relatifs des centres des trous des vitrages individuels est ainsi possible.

Pourtant, on pourrait également imaginer de réaliser les rondelles d'extrémité avec un contour tronconique et de les enfoncer au moins partiellement dans des trous coniques correspondants dans les vitrages extérieurs 1.1 respectivement 2.1. On pourrait ainsi - à la différence de l'illustration - obtenir une surface complètement ou approximativement lisse même dans la région de l'organe d'assemblage 5. Ceci peut éventuellement être renforcé avec une réalisation de la couche intermédiaire 7 sous la forme d'une couche adhésive. Pourtant, cette configuration n'est réalisable volontairement que si au moins les deux trous dans les vitrages extérieurs peuvent être positionnés axialement avec une grande précision.

L'organe d'assemblage 5 est appuyé radialement dans la paroi du trou de passage 6 au moyen d'éléments d'ajustement pour la transmission d'efforts sur la paroi. Dans la configuration montrée, ceux-ci se composent d'une bague de centrage 15 - de préférence en matière plastique - dont le diamètre intérieur correspond au diamètre extérieur de la douille 8 et dont le diamètre extérieur correspond au diamètre intérieur du trou du vitrage individuel 1.2. La bague de centrage 15 repose sur un épaulement annulaire de la douille 8. Sa distance par rapport à la rondelle d'extrémité 10 dans la direction longitudinale de la douille 8 est dimensionnée de telle façon que la bague de centrage 15 soit située aussi exactement que possible dans le trou du vitrage individuel 1.2 après l'insertion de la douille 8, dès que la rondelle d'extrémité 10 respectivement sa cale en matière plastique 11 est appliquée sur la surface extérieure du vitrage de verre.

La bague de centrage 15 détermine le centrage de l'organe d'assemblage 5 dans le trou de passage 6 et dès lors aussi la position des rondelles d'extrémité 10 et 14 par rapport au centre du trou dans la face extérieure. Pour la compensation d'éventuels écarts de position de l'axe du trou dans le vitrage individuel 2.2 par rapport à l'axe du trou dans le vitrage individuel 1.2, la douille est soutenue radialement dans ce dernier par une combinaison de deux bagues excentriques 16.1 et 16.2 connue en soi dans un contexte analogue (EP 506 522 B1), qui peuvent s'appliquer directement sur la bague de centrage 15 dans la direction axiale. Le diamètre intérieur de la bague excentrique interne 16.1 est égal au diamètre extérieur de la douille 8, tandis que le diamètre extérieur de la bague excentrique externe 16.2 est égal au diamètre intérieur du trou du vitrage individuel 2.2. De même, les bagues excentriques 16.1 et 16.2 sont, comme la bague de centrage 15, fabriquées de préférence en une matière plastique à haute résistance et résistant au vieillissement.

On voit qu'il est prévu dans les rondelles d'extrémité 10 et 13 chaque fois deux trous 17 et 18 de grandeur différente (dessinés en traits interrompus). Le trou plus grand 17 sert chaque fois, comme cela est indiqué par des flèches dirigées vers les trous, pour introduire une masse de remplissage dans les espaces creux subsistant dans le trou après le montage de l'organe d'assemblage 5, tandis que le trou plus petit respectif 18 non seulement laisse échapper l'air déplacé (flèches vers l'extérieur) mais sert de sortie de contrôle pour la masse de remplissage, après que celle-ci ait rempli entièrement ou en tous cas le plus largement possible lesdits espaces creux.

Pour le montage de l'organe d'assemblage, il est prévu que la douille 8 avec la rondelle d'extrémité 10 et la cale 11 soit groupée en une unité au moyen de la vis à tête 9. Pour réduire le nombre de pièces, on pourrait aussi regrouper en une seule pièce la douille avec la rondelle d'extrémité 10 (alors éventuellement sans vis 9). La bague de centrage 15 est engagée sur la douille 8 jusqu'à l'épaulement et maintenue en position sur celle-ci. L'unité avec la bague de centrage engagée 15 est introduite dans le trou par la face extérieure du vitrage feuilleté 1. Par une adaptation précise au diamètre intérieur du trou dans le vitrage 1.2, la bague de centrage 15 est positionnée exactement dans le centre du trou. Elle peut reprendre respectivement transmettre les efforts agissant sur cette paroi du trou. Un ajustement légèrement serré, ou aussi un revêtement adhésif du pourtour extérieur de la bague de centrage peut aider le montage, en empêchant celle-ci de tomber hors de l'unité préassemblée.

Avant la pose du vitrage feuilleté 2 dans la région de recouvrement 3 sur le vitrage feuilleté 1, on insère la couche intermédiaire transparente 7. Elle présente un évidement correspondant à la grandeur du trou de passage.

La bague excentrique interne 16.1 est glissée en une position quelconque sur la douille 8, jusqu'à ce qu'elle s'applique sur la bague de centrage 15. Après la pose du vitrage feuilleté 2, la bague excentrique externe 16.2 est introduite dans la position représentée, dans laquelle d'une part elle entoure la bague excentrique interne 16.1 et d'autre part elle s'applique extérieurement sur la surface latérale du trou du vitrage individuel 2.2. Pour compenser des écarts de centres des trous, les deux bagues excentriques 16.1 et 16.2 peuvent tourner l'une par rapport à l'autre. Au total, on obtient aussi une fixation de position dans le trou du vitrage individuel 2.2, en plus de la compensation des tolérances. On voit que seules les deux vitrages individuels intérieurs 1.2 et 2.2 des vitrages feuilletés 1 et 2 sont impliqués dans le centrage et dans le transfert des charges dans la paroi du trou de passage.

A la différence de cette représentation, il serait également possible de prévoir un centrage équivalent à l'aide des trous dans les vitrages individuels extérieurs 1.1 et 2.1. Etant donné que les vitrages individuels de chaque vitrage feuilleté sont assemblés l'un à l'autre de façon résistante au cisaillement par les couches adhésives, un transfert de charge (radial) dans un seul des deux vitrages, comme cela est montré ici, satisfait entièrement les exigences imposées.

Pour l'assemblage final solide des vitrages feuilletés 1 et 2, la vis 12 est à présent vissée à la douille 8 avec la rondelle d'extrémité 13 et la couche intermédiaire 14, pour fermer le trou 6. Il est avantageux que, abstraction faite d'une estimation précise du couple de serrage prévu pour le serrage de la vis 12, la longueur axiale de la douille 8 soit adaptée à l'épaisseur totale de la région de recouvrement 3, de telle façon que la douille forme une butée de sécurité contre un serrage trop fort des vis et un écrasement trop important des rondelles d'extrémité sur les faces extérieures, afin de pouvoir éviter des dommages aux vitrages feuilletés.

Les espaces creux résiduels du trou de passage 6 sont comblés avec une masse de remplissage appropriée (mortier de ciment à plusieurs composants, résine de moulage, etc.). En l'occurrence, la masse de remplissage est injectée sous pression par le trou plus grand 17 prévu dans les rondelles d'extrémité 10 respectivement 14, jusqu'à ce qu'elle sorte par les orifices de sortie plus petits 18. Après durcissement de la masse de remplissage, une application ou une transmission uniforme des efforts dans la paroi du trou est garantie. En même temps, l'organe d'assemblage 5 est complètement enrobé dans le trou de passage 6. La couche intermédiaire (transparente) 7 empêche la pénétration de masse de remplissage dans la fente entre les vitrages 1.2 et 2.2 dans la région de recouvrement.

On rappellera que plusieurs trous 6 et plusieurs organes d'assemblage 5 de ce type peuvent être prévus dans une seule et même région de recouvrement 3, lorsque les sollicitations rencontrées le requièrent. Dans l'application préférée du dispositif d'assemblage pour le montage de longerons ou de bandes de verre, qui sont prévus pour le renforcement de façades entièrement vitrées, le module de construction (long et élancé à la manière d'une poutre) composé d'au moins deux vitrages feuilletés successifs (qui à leur tour peuvent être constitués de deux, trois ou encore davantage de vitrages individuels assemblés) est posé avec une arête longitudinale sur la face de la façade ou est assemblé à celle-ci.

Les faces extérieures des vitrages feuilletés sont ainsi inclinées par rapport à la surface de la façade, qui est à son tour composée d'une pluralité de vitrages de verre fixés à une ossature tout étant situées dans le plan de la surface de la façade. Des efforts extérieurs (par exemple courbure de la façade sous l'effet du vent) introduisent par conséquent dans le module des efforts transversaux de flexion, qui sont le cas échéant mieux repris et transmis avec plusieurs dispositifs d'assemblage placés les uns à côté des autres. La charge principale agit en l'occurrence en cisaillement sur les organes d'assemblage prévus dans la région de recouvrement. En l'occurrence, ces derniers peuvent être placés en ligne, ou aux angles d'un polygone.

Chaque poutre individuelle en vitrages feuilletés a au maximum une longueur d'environ 6 m, eu égard à la longueur maximale usuelle des demi-produits. Il va de soi par conséquent que lesdits modules peuvent aussi s'étendre sur plusieurs assemblages bord à bord avec des dispositifs d'assemblage conformes à l'invention, si la façade s'étend par exemple sur plusieurs étages.

La longueur totale de la région de recouvrement dans la direction d'extension des vitrages feuilletés sera, tout comme la largeur des vitrages feuilletés eux-mêmes, dimensionnée selon le cas de charge ainsi que, le cas échéant, selon le nombre des trous de passage et des organes d'assemblage à placer par région de recouvrement. A titre d'exemple , cette zone de recouvrement peut atteindre les 2 mètres.

## Revendications

1. Ensemble comprenant au moins deux vitrages feuilletés (1, 2) composés chacun de plusieurs vitrages individuels (1.1 à 1.4, 2.1 à 2.4) rigides et assemblés l'un à l'autre en surface au moyen de couches adhésives intermédiaires, où les vitrages feuilletés (1, 2) se succèdent dans une direction d'extension, en se recouvrant partiellement dans des régions de bord contiguës en projection perpendiculaire sur les faces des vitrages en formant une région de recouvrement (3), les vitrages feuilletés (1, 2) étant assemblés l'un à l'autre dans cette région de recouvrement (3) limitée du côté du bord, **caractérisé en ce que** seulement certains vitrages individuels (1.1 à 1.4, 2.1 a 2.4) rigides de chaque vitrage feuilleté (1, 2) et au moins un vitrage individuel (1.1, 1.2, 2.1, 2.2) de chaque vitrage feuilleté (1, 2) s'étendent dans la région de recouvrement (3).

2. Ensemble selon la revendication 1, **caractérisé en ce que** l'épaisseur de la région de recouvrement (3), définie par les épaisseurs des vitrages individuels (1.1, 1.2, 2.1, 2.2) s'étendant dans celle-ci et éventuellement d'au moins une couche adhésive intermédiaire (7), ne dépasse pas au total l'épaisseur d'un vitrage feuilleté individuel (1, 2).

3. Ensemble selon la revendication 1 ou 2, **caractérisé en ce que** chaque vitrage feuilleté (1, 2) présente des arêtes bord à bord (1K, 1K', 2K, 2K') jointives dans la région de recouvrement (3) et décalées l'une par rapport à l'autre dans la direction d'extension.

4. Ensemble selon l'une quelconque des revendications précédentes, **caractérisé en ce que** chaque vitrage feuilleté (1, 2) comprend dans la région du bord au moins un vitrage individuel qui dépasse avec une arête saillante (1K, 2K) et au moins un vitrage individuel avec une arête en retrait (1K', 2K').

5. Ensemble selon la revendication 4, dans lequel une arête saillante (1K, 2K) et/ou une arête en retrait (1K', 2K') appartient en commun à plusieurs vitrages individuels (1.1, 1.2; 2.1, 2.2; 1.3, 1.4; 2.3, 2.4) assemblés en surface l'un à l'autre.

6. Ensemble selon la revendication 4 ou 5, **caractérisé en ce que**, dans la direction d'extension, une arête saillante (1K, 2K) d'un deuxième vitrage feuilleté suit chaque fois une arête en retrait (1K'; 2K') d'un premier vitrage feuilleté.

7. Ensemble selon la revendication 4 ou 5 ou 6, dans lequel deux arêtes décalées l'une par rapport à l'autre (1K, 1K'; 2K, 2K') forment un échelonnement du côté du bord de chaque vitrage feuilleté (1, 2).

8. Ensemble selon la revendication 4 ou 5 ou 6, dans lequel il est prévu, sur un vitrage feuilleté, au moins deux arêtes saillantes et au moins une arête en retrait située entre celles-ci et, sur l'autre vitrage feuilleté, au moins une arête saillante et au moins deux arêtes en retrait, dans lequel les vitrages feuilletés comprennent au moins trois vitrages individuels.

9. Ensemble selon l'une quelconque des revendications précédentes, **caractérisé en ce qu'**il est prévu dans la région de recouvrement (3) au moins un organe d'assemblage mécanique (5) réunissant les vitrages feuilletés qui se succèdent (1, 2).

10. Ensemble selon l'une quelconque des revendications précédentes, **caractérisé en ce qu'**il est prévu dans la région de recouvrement (3) une couche intermédiaire collante entre les faces de deux vitrages feuilletés qui se succèdent.

11. Ensemble selon l'une quelconque des revendications précédentes, **caractérisé en ce qu'**il est prévu dans la région de recouvrement (3) au moins un trou de passage (6) traversant les vitrages feuilletés (1, 2) pour l'introduction et/ou la fixation d'un organe d'assemblage mécanique (5).

12. Ensemble selon la revendication 11, **caractérisé en ce que** l'organe d'assemblage mécanique (5) comprend des moyens pour centrer son axe longitudinal traversant les vitrages feuilletés dans le trou de passage.

13. Ensemble selon la revendication 12, **caractérisé en ce que** l'organe d'assemblage mécanique (5) est centré fixement sur l'axe d'un trou d'un premier vitrage individuel (1.2) d'un premier vitrage feuilleté (1), et **en ce qu'**il comporte des moyens (16.1, 16.2) pour compenser des écarts de centres d'un trou d'un deuxième vitrage individuel (2.2), appartenant à un autre vitrage feuilleté (2), hors dudit axe.

14. Ensemble selon la revendication 13, **caractérisé en ce que** l'organe d'assemblage mécanique comprend au moins une tige ou une douille (8) pouvant être introduite dans le trou de passage (6), une bague de centrage (15) entourant la tige ou la douille en ajustement précis et pouvant être ajustée dans un trou d'un vitrage individuel, et au moins une bague excentrique, de préférence deux bagues excentriques (16.1, 16.2) pouvant tourner l'une par rapport à l'autre, qui d'une part entourent également la tige ou la douille en ajustement précis et d'autre part peuvent également être ajustées dans un trou d'un autre vitrage individuel.

15. Ensemble selon l'une quelconque des revendications 11 à 14, **caractérisé en ce que** l'organe d'assemblage mécanique (5) comprend des rondelles d'extrémité (10, 13) pour masquer le trou de passage vers l'extérieur.

16. Ensemble selon les revendications 14 et 15, **caractérisé en ce que** les rondelles d'extrémité (10, 13) peuvent être serrées, en particulier vissées, avec la tige ou la douille (8), dans lequel la tige ou la douille (8) est bloquée dans sa direction axiale dans le trou de passage après le serrage ou le vissage des deux rondelles d'extrémité.

17. Ensemble selon la revendication 15 ou 16, **caractérisé en ce que** les rondelles d'extrémité (10, 13) sont appliquées à plat, de préférence avec des cales intermédiaires (11, 14), sur les faces extérieures des vitrages feuilletés (1, 2) autour des sorties du trou de passage (6).

18. Ensemble selon l'une quelconque des revendications 11 à 17, **caractérisé en ce qu'**après l'introduction et/ou le montage de l'organe d'assemblage mécanique (5) dans le trou de passage (6), les espaces creux restants sont comblés avec une masse de remplissage.

19. Ensemble selon la revendication 18 et l'une quelconque des revendications 15 à 17, **caractérisé en ce que** les rondelles d'extrémité (10, 13) comportent des orifices (17) pour l'introduction de la masse de remplissage.

20. Ensemble selon la revendication 19, **caractérisé en ce que** les rondelles d'extrémité comportent en outre des orifices (18) pour évacuer l'air déplacé par la masse de remplissage introduite.

21. Ensemble selon l'une quelconque des revendications précédentes, **caractérisé en ce qu'**au moins les vitrages individuels s'étendant dans la région de recouvrement sont en verre partiellement précontraint ou précontraint.

22. Module de construction comprenant un ensemble selon l'une quelconque des revendications précédentes.

## Patentansprüche

1. Anordnung, umfassend wenigstens zwei Verbundscheiben (1, 2), die jeweils aus mehreren starren und an der Oberfläche mittels Zwischenhaftschichten miteinander verbundenen Einzelscheiben (1.1 bis 1.4, 2.1 bis 2.4) bestehen, wobei die Verbundscheiben (1, 2), sich in angrenzenden Randbereichen in senkrechter Projektion auf die Vorderseiten der Scheiben teilweise überlappend, unter Bildung eines Überlappungsbereiches (3) in einer Erstreckungsrichtung aufeinanderfolgen, wobei die Verbundscheiben (1, 2) in diesem Überlappungsbereich (3), der randseitig begrenzt ist, miteinander verbunden sind, **dadurch gekennzeichnet, dass** nur einige starre Einzelscheiben (1.1 bis 1.4, 2.1 bis 2.4) einer jeden Verbundscheibe (1, 2) sowie wenigstens eine Einzelscheibe (1.1, 1.2, 2.1, 2.2) einer jeden Verbundscheibe (1, 2) sich in dem Überlappungsbereich (3) erstrecken.

2. Anordnung nach Anspruch 1, **dadurch gekennzeichnet, dass** die Dicke des Überlappungsbereiches (3), die durch die Dicken der Einzelscheiben (1.1, 1.2, 2.1, 2.2), welche sich in diesem erstrecken, und eventuell von wenigstens einer Zwischenhaftschicht (7) definiert ist, insgesamt die Dicke einer einzelnen Verbundscheibe (1, 2) nicht überschreitet.

3. Anordnung nach Anspruch 1 oder 2, **dadurch gekennzeichnet, dass** jede Verbundscheibe (1, 2) Stumpfkanten (1K, 1K', 2K, 2K') aufweist, die in dem Überlappungsbereich (3) aneinanderstoßen und in der Erstreckungsrichtung zueinander versetzt sind.

4. Anordnung nach einem der vorhergehenden Ansprüche, **dadurch gekennzeichnet, dass** jede Verbundscheibe (1, 2) im Bereich des Randes wenigstens eine Einzelscheibe, die mit einer vorspringenden Kante (1K, 2K) hinausragt, und wenigstens eine Einzelscheibe mit einer zurückspringenden Kante (1K', 2K') umfasst.

5. Anordnung nach Anspruch 4, wobei eine vorspringende Kante (1K, 2K) und/oder eine zurückspringende Kante (1K', 2K') gemeinsam zu mehreren Einzelscheiben (1.1, 1.2; 2.1, 2.2; 1.3, 1.4; 2.3, 2.4), welche an der Oberfläche miteinander verbunden sind, gehört.

6. Anordnung nach Anspruch 4 oder 5, **dadurch gekennzeichnet, dass** in der Erstreckungsrichtung eine vorspringende Kante (1K, 2K) einer zweiten Verbundscheibe jedes Mal auf eine zurückspringende Kante (1K'; 2K') einer ersten Verbundscheibe folgt.

7. Anordnung nach Anspruch 4 oder 5 oder 6, wobei zwei zueinander versetzte Kanten (1K, 1K'; 2K, 2K') eine randseitige Abstufung einer jeden Verbundscheibe (1, 2) bilden.

8. Anordnung nach Anspruch 4 oder 5 oder 6, wobei an einer Verbundscheibe wenigstens zwei vorspringende Kanten und wenigstens eine zwischen diesen gelegene zurückspringende Kante sowie, an der anderen Verbundscheibe, wenigstens eine vorspringende Kante und wenigstens zwei zurückspringende Kanten vorgesehen sind, wobei die Verbundscheiben wenigstens drei Einzelscheiben umfassen.

9. Anordnung nach einem der vorhergehenden Ansprüche, **dadurch gekennzeichnet, dass** in dem Überlappungsbereich (3) wenigstens ein mechanisches Verbindungsorgan (5), das die aufeinanderfolgenden Verbundscheiben (1, 2) miteinander verbindet, vorgesehen ist.

10. Anordnung nach einem der vorhergehenden Ansprüche, **dadurch gekennzeichnet, dass** in dem Überlappungsbereich (3) eine Klebezwischenschicht zwischen den Flächen von zwei aufeinanderfolgenden Verbundscheiben vorgesehen ist.

11. Anordnung nach einem der vorhergehenden Ansprüche, **dadurch gekennzeichnet, dass** in dem Überlappungsbereich (3) wenigstens ein die Verbundscheiben (1, 2) durchquerendes Durchgangsloch (6) für das Einführen und/oder die Befestigung eines mechanischen Verbindungsorgans (5) vorgesehen ist.

12. Anordnung nach Anspruch 11, **dadurch gekennzeichnet, dass** das mechanische Verbindungsorgan (5) Mittel umfasst, um seine die Verbundscheiben durchquerende Längsachse in dem Durchgangsloch zu zentrieren.

13. Anordnung nach Anspruch 12, **dadurch gekennzeichnet, dass** das mechanische Verbindungsorgan (5) um die Achse eines Lochs einer ersten Einzelscheibe (1.2) einer ersten Verbundscheibe (1) fest zentriert ist und dass es Mittel (16.1, 16.2) umfasst, um Mittenabweichungen eines Lochs einer zu einer anderen Verbundscheibe (2) gehörenden zweiten Einzelscheibe (2.2) aus der Achse zu kompensieren.

14. Anordnung nach Anspruch 13, **dadurch gekennzeichnet, dass** das mechanische Verbindungsorgan wenigstens einen Stift oder eine Hülse (8), der/die in das Durchgangsloch (6) eingeführt werden kann, einen Zentrierring (15), der den Stift oder die Hülse genau passend umschließt und in ein Loch einer Einzelscheibe eingepasst werden kann, sowie wenigstens einen Exzenterring, vorzugsweise zwei zueinander drehbare Exzenterringe (16.1, 16.2), die einerseits ebenfalls den Stift oder die Hülse genau passend umschließen und andererseits ebenfalls in ein Loch einer anderen Einzelscheibe eingepasst werden können, umfasst.

15. Anordnung nach einem der Ansprüche 11 bis 14, **dadurch gekennzeichnet, dass** das mechanische Verbindungsorgan (5) endseitige Scheiben (10, 13) umfasst, um das Durchgangsloch nach außen zu verdecken.

16. Anordnung nach den Ansprüchen 14 und 15, **dadurch gekennzeichnet, dass** die endseitigen Scheiben (10, 13) mit dem Stift oder der Hülse (8) verspannt, insbesondere verschraubt werden können, wobei der Stift oder die Hülse (8) nach dem Verspannen oder dem Verschrauben der beiden endseitigen Scheiben in seiner/ihrer axialen Richtung in dem Durchgangsloch blockiert ist.

17. Anordnung nach Anspruch 15 oder 16, **dadurch gekennzeichnet, dass** die endseitigen Scheiben (10, 13), vorzugsweise mit Zwischenscheiben (11, 14), an die Außenseiten der Verbundscheiben (1, 2) um die Ausgänge des Durchgangslochs (6) herum flach angelegt sind.

18. Anordnung nach einem der Ansprüche 11 bis 17, **dadurch gekennzeichnet, dass** nach dem Einführen und/oder dem Anbringen des mechanischen Verbindungsorgans (5) in dem Durchgangsloch (6) die verbleibenden Hohlräume mit einer Füllmasse ausgefüllt werden.

19. Anordnung nach Anspruch 18 und einem der Ansprüche 15 bis 17, **dadurch gekennzeichnet, dass** die endseitigen Scheiben (10, 13) Öffnungen (17) für das Einbringen der Füllmasse umfassen.

20. Anordnung nach Anspruch 19, **dadurch gekennzeichnet, dass** die endseitigen Scheiben ferner Öffnungen (18), um die durch die eingebrachte Füllmasse bewegte Luft abzuführen, umfassen.

21. Anordnung nach einem der vorhergehenden Ansprüche, **dadurch gekennzeichnet, dass** wenigstens die sich in dem Überlappungsbereich erstreckenden Einzelscheiben aus teilweise vorgespanntem oder vorgespanntem Glas bestehen.

22. Baumodul, umfassend eine Anordnung nach einem der vorhergehenden Ansprüche.

## Claims

1. Assembly comprising at least two laminated glazing elements (1, 2) each consisting of several individual glazing elements (1.1 to 1.4, 2.1 to 2.4) which are rigid and assembled to one another at the surface by means of intermediate bonding layers, where the laminated glazing elements (1, 2) succeed one another in a direction of extension, while partially overlapping in contiguous edge regions in perpendicular projection on the faces of the glazing elements so as to form an overlap region (3), the laminated glazing elements (1, 2) being assembled to one another in this limited overlap region (3) on the edge side, **characterized in that** only some of the rigid individual glazing elements (1.1, 1.2, 2.1, 2.2) of each laminated glazing element (1, 2) and at least one individual glazing element (1.1, 1.2, 2.1, 2.2) of each laminated glazing element (1, 2) extend into the overlap region (3).

2. Assembly as claimed in claim 1, **characterized in that** the thickness of the overlap region (3), defined by the thicknesses of the individual glazing elements (1.1, 1.2, 2.1, 2.2) extending into the latter and where necessary of at least one intermediate adhesive layer (7), does not exceed in total the thickness of an individual laminated glazing element (1, 2).

3. Assembly as claimed in claim 1 or 2, **characterized in that** each laminated glazing element (1, 2) has rims edge to edge (1K, 1K' , 2K, 2K') contiguous in the overlap region (3) and offset one from the other in the direction of extension.

4. Assembly as claimed in any one of the preceding claims, **characterized in that** each laminated glazing element (1, 2) comprises in the edge region at least one individual glazing element which protrudes with one projecting rim (1K, 2K) and at least one individual glazing element with one recessed rim (1K', 2K').

5. Assembly as claimed in claim 4, in which one projecting rim (1K, 2K) and/or one recessed rim (1K', 2K') belongs in common to several individual glazing elements (1.1, 1.2; 2.1, 2.2; 1.3, 1.4; 2.3, 2.4) assembled to one another at the surface.

6. Assembly as claimed in claim 4 or 5, **characterized in that**, in the direction of extension, a projecting rim (1K, 2K) of a second laminated glazing element each time follows a recessed rim (1K', 2K') of a first laminated glazing element.

7. Assembly as claimed in claim 4 or 5 or 6, in which two rims offset relative to one another (1K, 1K'; 2K, 2K') form a staggered formation on the side of the edge of each laminated glazing element (1, 2).

8. Assembly as claimed in claim 4 or 5 or 6, in which, on one laminated glazing element, there are provided at least two projecting rims and at least one recessed rim situated between the latter and on the other laminated glazing element at least one projecting rim and at least two recessed rims, in which the laminated glazing elements comprise at least three individual glazing elements.

9. Assembly as claimed in any one of the preceding claims, **characterized in that**, in the overlap region (3), at least one mechanical assembly member (5) combining the successive laminated glazing elements (1, 2) is provided.

10. Assembly as claimed in any one of the preceding claims, **characterized in that**, in the overlap region (3), one intermediate bonding layer is provided between the faces of two successive laminated glazing elements.

11. Assembly as claimed in any one of the preceding claims, **characterized in that**, in the overlap region (3), at least one through-hole (6) passing through the laminated glazing elements (1, 2) is provided for the insertion and/or fixing of a mechanical assembly member (5).

12. Assembly as claimed in claim 11, **characterized in that** the mechanical assembly member (5) comprises means for centering its longitudinal axis passing through the laminated glazing elements in the through-hole.

13. Assembly as claimed in claim 12, **characterized in that** the mechanical assembly member (5) is centered fixedly on the axis of a hole of a first individual glazing element (1.2) of a first laminated glazing element (1), and **in that** it comprises means (16.1, 16.2) of compensating for off-center positionings of a hole of a second individual glazing element (2.2), belonging to another laminated glazing element (2), outside said axis.

14. Assembly as claimed in claim 13, **characterized in that** the mechanical assembly member comprises at least one rod or one sleeve (8) able to be inserted in the through-hole (6), one centering ring (15) surrounding the rod or the sleeve in precise adjustment and able to be adjusted in a hole of an individual glazing element, and at least one eccentric ring, preferably two eccentric rings (16.1, 16.2) able to rotate relative to one another, which, on the one hand, also surround the rod or the sleeve in precise adjustment and, on the other hand, can also be adjusted in a hole of another individual glazing element.

15. Assembly as claimed in any one of claims 11 to 14, **characterized in that** the mechanical assembly member (5) comprises end washers (10, 13) to mask the through-hole on the outside.

16. Assembly as claimed in claims 14 and 15, **characterized in that** the end washers (10, 13) may be tightened, in particular screwed, with the rod or the sleeve (8), in which device the rod or the sleeve (8) is immobilized in its axial direction in the through-hole after the tightening or screwing of the two end washers.

17. Assembly as claimed in claim 15 or 16, **characterized in that** the end washers (10, 13) are applied flat, preferably with intermediate shims (11, 14), on the outer faces of the laminated glazing elements (1, 2) about the exits of the through-hole (6).

18. Assembly as claimed in any one of claims 11 to 17, **characterized in that**, after the insertion and/or installation of the mechanical assembly member (5) in the through-hole (6), the remaining hollow spaces are filled with a mass of filler.

19. Assembly as claimed in claim 18 and any one of claims 15 to 17, **characterized in that** the end washers (10, 13) comprise orifices (17) for the insertion of the mass of filler.

20. Assembly as claimed in claim 19, **characterized in that** the end washers also comprise orifices (18) to discharge the air displaced by the inserted mass of filler.

21. Assembly as claimed in any one of the preceding claims, **characterized in that** at least the individual glazing elements extending into the overlap region are made of partially prestressed or prestressed glass.

22. Construction module comprising an assembly as claimed in any one of the preceding claims.
